# EUROPEAN PATENT SPECIFICATION

(11) **EP 3 577 048 B1**
(45) Date of publication and mention of the grant of the patent: **07.06.2023**
(21) Application number: 17870987.9
(22) Date of filing: 14.11.2017
(51) Int. Cl.: B65G 53/24, B65F 5/00, B65G 53/36, B65G 53/56

(54) **SYSTEM AND METHOD FOR CONVEYING CONSTRUCTION WASTE**
SYSTEM UND VERFAHREN ZUM FÖRDERN VON BAUABFALL
SYSTÈME ET PROCÉDÉ POUR TRANSPORTER DES DÉCHETS DE CONSTRUCTION

(30) Priority: 18.11.2016 FI 20165870
(43) Date of publication of application: 11.12.2019
(73) Proprietor: Jokila, Jari, 01300 Vantaa (FI)
(72) Inventor: Jokila, Jari, 01300 Vantaa (FI)
(74) Representative: Papula Oy
(86) International application number: PCT/FI2017/050781
(87) International publication number: WO 2018/091778

(56) References cited:
- EP-A1- 1 039 068
- WO-A1-2005/092751
- WO-A1-2014/049197
- WO-A1-2014/049197
- DE-A1- 2 614 713
- DE-C1- 3 900 173
- FR-A1- 2 807 083
- JP-A- S5 493 572
- JP-A- H04 326 954
- JP-A- 2008 202 294
- JP-U- S59 123 019
- US-A- 4 013 551
- US-A1- 2016 176 657

## Description

The object of the invention is a system and a method for conveying material into containers from at least two different input locations.

The construction waste produced in building renovation is crushed with crushers and conveyed from the crushers into a transportation container, e.g. pneumatically, and is transported to a further processing site. Construction waste can be classified into three different categories: waste containing no harmful elements; mixed waste containing no harmful elements; and waste containing harmful elements, such as asbestos waste. Waste containing no harmful elements comprises plaster mortar and floor casting mortar, brick and other stony material containing no harmful elements, as well as other crushable construction material. Waste containing no harmful elements can be treated as a reusable waste, for which reason further processing of it is most advantageous in cost. Mixed waste containing no harmful elements comprises e.g. tiling waste containing no harmful elements, and further processing of it is more expensive than of waste containing no harmful elements. Waste containing harmful elements typically comprises construction material containing asbestos, and further processing of it is the most expensive

If waste belonging to different categories is produced at a renovation site, all the waste is conveyed into the same receptacle and is postprocessed according to the waste of the most expensive category contained in the receptacle. This considerably increases the costs of handling waste if e.g. there are small amounts of asbestos in the waste.

Document WO 2014/049197 A1 discloses a system and method for conveying construction waste according to the preamble of claims 1 and 7.

The purpose of this invention is to provide an improved solution for conveying material into containers.

The aims of the invention are achieved with a system according to claim 1 and with a method according to claim 7.

Significant advantages are achieved with the solution according to the invention. The system according to the invention enables the sorting of construction waste according to kind. Waste belonging to different categories, e.g. construction waste containing harmful elements and construction waste containing no harmful elements, can be sorted into their own containers, in which case savings can be made in further processing costs, because material having cheaper processing costs is not processed together with material having more expensive processing costs.

According to the invention the outlet pipes leading from the input locations to the containers are provided with shut-off means, and by opening and closing these means the material can be conveyed into the selected container e.g. according to the kind of material. In this case e.g. when the kind of material being fed in changes, the container can be changed with the shut-off means to the container intended for the new material. The shut-off means can be controlled from an input location, e.g. from a crusher crushing the material being fed in, in which case a person at the input location does not need to move from the input location over to the containers or to the shut-off means. Also, when a container fills up, the input of material into a new container can be started by controlling the shut-off means in the desired manner from the input location.

In the following, the invention will be described in more detail by the aid of some embodiments with reference to the attached drawings, wherein
Fig. 1 presents a schematic view of a material conveying system which is not part of the invention,
Fig. 2 presents a schematic view of a material conveying system according to the invention,
Fig. 3 presents a crusher, which can be used in the material conveying systems of Figs. 1 and 2,
Fig. 4 presents the crusher of Fig. 3, with the enclosure partly removed,
Fig. 5 presents the crusher rotor of the crusher of Fig. 3,
Fig. 6 presents the crusher rotor of the crusher of Fig. 3, with the enclosure opened.

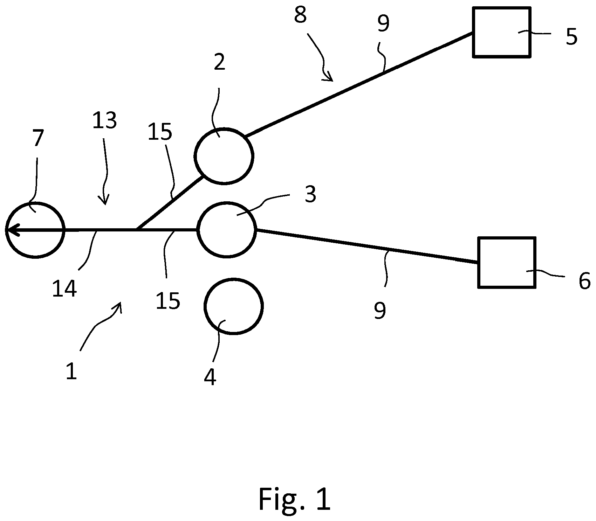

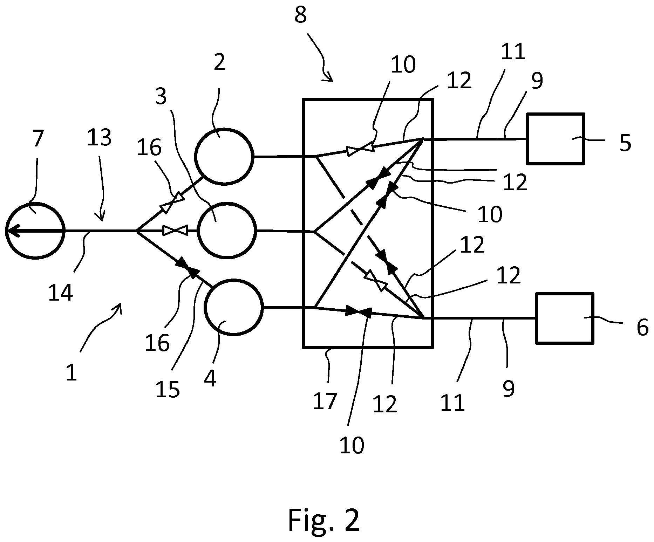

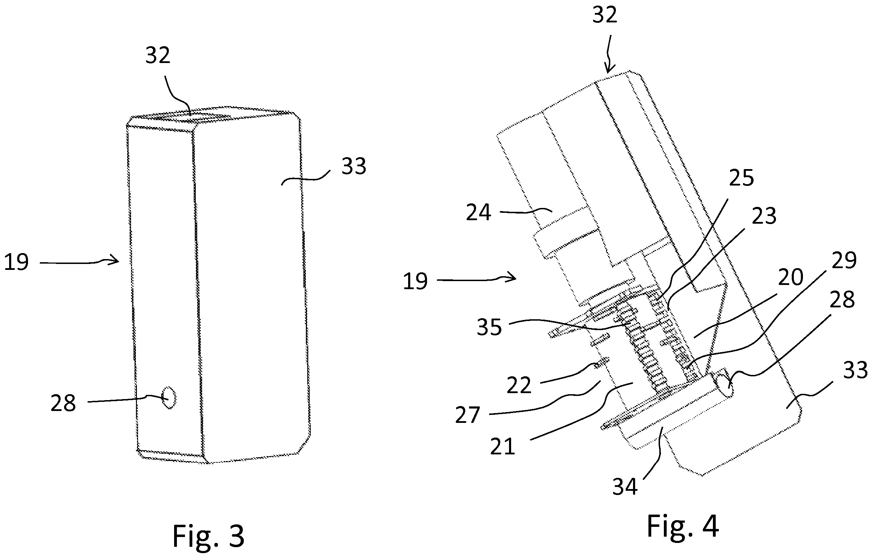

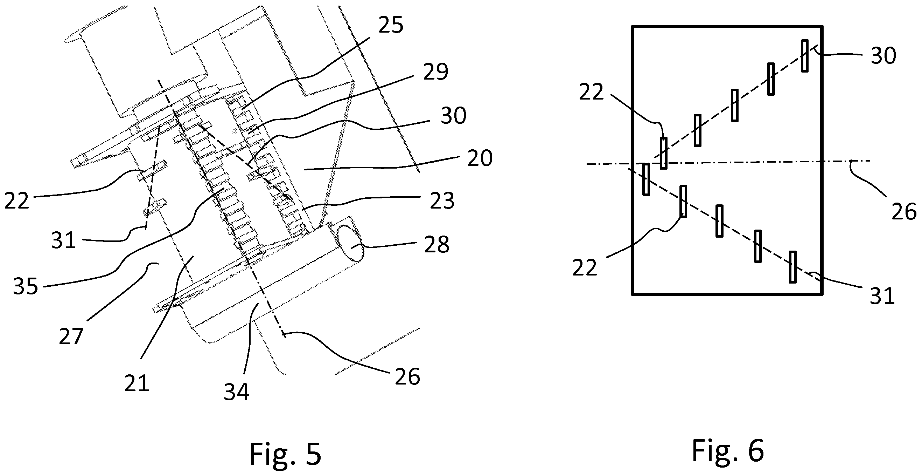

Figs. 1 and 2 present a material conveying system 1, with which material, such as construction waste can be conveyed pneumatically by means of suction from two or more input locations 5, 6 into two or more containers 2, 3, 4 simultaneously with one suction device 7. The system 1 is particularly suited to the conveying of construction waste produced in building renovation, such as in the renovation of the piping, into containers on the basis of the type of construction waste. The input locations 5, 6 can be crushers, with which the construction waste is crushed and from which the construction waste is conveyed pneumatically into the selected containers. One such crusher is presented in Figs. 3-6.

The system 1 comprises two or more containers 2, 3, 4, into which construction waste is conveyed. The containers 2, 3, 4 are intended for different types of construction waste. In the embodiment according to the drawings there are three containers. The first container 2 is intended e.g. for reusable waste, which comprises construction material containing no harmful elements, such as plaster mortar or floor casting mortar, brick, other stony material containing no harmful elements or other crushable construction material, which can be further processed as reusable waste. The further processing of this type of construction waste is the most cost advantageous.

The second container 3 is intended e.g. for construction waste containing a harmful element, such as asbestos, which is postprocessed as hazardous waste. The third container 4 is intended e.g. for mixed waste, such as for construction waste containing no harmful elements, e.g. tiling waste. The further processing of mixed waste is more expensive than that of reusable waste, but less expensive than that of hazardous waste.

A container 2, 3, 4 can be e.g. an intermodal container, a transport tank or a sack, e.g. a flexible intermediate bulk container of 1 m³ or more in volume, in which the material can be conveyed for further processing. A container 2, 3, 4 can be provided with a separating device, such as with a cyclone, with which the material being conveyed is separated from the air flow. The separating device can be in the container space of a container 2, 3, 4 or it can be separated from the container space, in which case the material separated from the air flow is conveyed into the container space e.g. by means of gravity. The second container 3 can be provided with a prefilter for prefiltering asbestos from the air flow being removed from the container 3. Each container 2, 3, 4 comprises an input aperture, via which the material is conveyed in the container by means of suction. In addition, each container 2, 3, 4 comprises an output aperture for removing air from the container 2, 3, 4.

The system 1 further comprises a suction device 7 for conveying material pneumatically by means of suction simultaneously from at least two different input locations 5, 6 into the selected containers 2, 3, 4. There is only one suction device 7. The suction device 7 can be a high-power vacuum, which is installed e.g. in an intermodal container. The suction air flow produced by the suction device 7 is typically 7000-10000 m³/h, when the suction pressure is 500 mbar (negative pressure). A suction device 7 is simultaneously connectable into flow connection with, optionally, two or more containers 2, 3, 4. The suction device 7 is connected to the containers 2, 3, 4 with a suction pipe 13, which comprises a branch pipe 15 for each container 2, 3, 4. The branch pipes 15 have switching means 16, with which the suction device 7 can be connected selectively into flow connection with the containers 2, 3, 4. The switching means 16 can be shut-off means, such as valves, installed in the branch pipes 15, with which means the air flow through each branch pipe 15 can be prevented and allowed. The switching means 16 are controllable independently of each other. The suction pipe 13 comprises a main pipe 14, which is connected to the suction device 7, and branch pipes 15 branching from the main pipe 14, which are connected to the containers 2, 3, 4.

There are at least two input locations 5, 6. Typically the capacity of one suction device 7 is adequate in renovation work for conveying the construction waste from 2-4 input locations simultaneously, if the construction waste is sufficiently fine-grained. The input location 5, 6 can be the crusher, described below, with which the construction waste is crushed and from which the crushed construction waste is transported by means of suction into the selected container 2, 3, 4. In renovation, the suction device 7 and containers 2, 3, 4 are usually outside the building being renovated and the input locations 5, 6 inside the building, e.g. in the apartments.

In addition, the system 1 comprises a pipe arrangement 8 connected to the containers 2, 3, 4 for forming a flow connection between the containers 2, 3, 4 and the input locations 5, 6. The material is arranged to be conveyed from the input locations 5, 6 into the containers 2, 3, 4 along the pipe arrangement by means of the suction of the suction device 7.

In the embodiment according to Fig. 1 the pipe arrangement 8 comprises an outlet pipe 9 for each input location 5, 6. One end of the outlet pipe 9 is connected to the selected container 2, 3, 4 and the other end to the input location 5, 6. The second end of the outlet pipe 9 can be connected to the output aperture of a crusher. At least two outlet pipes 9 are connected to different containers 2, 3, 4. The container 2, 3, 4 to which the outlet pipe 9 is connected can be replaced by detaching the end of the outlet pipe 9 from the container 2, 3, 4 and fastening it to a different container 2, 3, 4.

In the embodiment according to Fig. 2 the pipe arrangement 8 comprises an outlet pipe 9 for each output location 5, 6. The outlet pipes 9 comprise shut-off means 10 for selectively connecting the input locations 5, 6 into flow connection with the containers 2, 3, 4. The outlet pipe 9 comprises a main pipe 11 and a branch pipe 12 branching from the main pipe 11, one branch pipe for each container 2, 3, 4. The branch pipes 12 that are of different outlet pipes 9 and that lead to the same container 2, 3, 4 are connected to the container 2, 3, 4 either directly or indirectly, e.g. via a conveying pipe 18 connected to a container 2, 3, 4, as in Fig. 2. Each branch pipe 12 is provided with a shut-off means 10, with which the air flow through the branch pipe 12 can be prevented and allowed. The shut-off means 10 can be shut-off devices, such as valves, installed in the branch pipes 12. The shut-off means 10 are controllable independently of each other. The material can be conveyed from the input location 5, 6 to any container 2, 3, 4 whatsoever along the outlet pipe 9.

The pipe arrangement 8 can comprise a switching unit 17, in which the shut-off means 10 of one or more outlet pipes 9 are disposed. Furthermore, the branch pipes 12 of an outlet pipe 9 are wholly or partly disposed in the switching unit 17. In Fig. 2, the part of the pipe arrangement 8 comprised in the switching unit 17 is presented with dashed lines. The switching unit 17 comprises the branch pipe 12 and shut-off means 10 of two outlet pipes 9. The switching unit 17 comprises an input connector for each outlet pipe 9. In addition, the switching unit 17 comprises an outlet connector to the conveying pipes 18 of the containers. The outlet pipes 9 are connected to the input connectors. The conveying pipes 18 of the containers are connected to the output connectors. The flow coming from an outlet pipe 9 is guided with the shut-off means 10 into the selected branch pipe 12. The flow through the other branch pipes 12 of the outlet pipe 9 can be prevented with the shut-off means 10. The flow from the branch pipe 12 is conducted onwards via the output connector into the selected conveying pipe 18 of a container 2, 3, 4. The switching unit 17 can comprise the branch pipes 12 and shut-off means 10 of one or more outlet pipes 9. In Fig. 2, the switching unit 17 comprises the branch pipes 12 and shut-off means 10 of both the outlet pipes 9 of the input locations 5, 6. The outlet pipes 9 and conveying pipes 18 are detachable from the switching unit 17, in which case the switching unit 17 can be moved from one operating location to another separate from the rest of the pipe arrangement 8. The switching unit 17 comprises an enclosure, in which the shut-off means 10 and branch pipes 12 are disposed.

The switching means 16 of the branch pipes 15 of the suction pipe 13 and/or the shut-off means 10 of the branch pipes 12 of the outlet pipes 9 are controllable from an input location 5, 6, e.g. from crushers. For control of the switching means 16 and/or shut-off means 10, control units are arranged at the input locations 5, 6. The control units can be connected to the switching means 16 and/or to the shut-off means 10 wirelessly or with wiring, which is arranged e.g. in connection with the pipe arrangement 8.

The system 1 functions in the following manner. A flow connection is formed from the suction device 7 into the selected containers 2, 3, 4, i.e. the containers into which the construction waste is conveyed from the input locations 5, 6. The construction waste is conveyed from the first input location 5 into a different container than that from the second input location 6. In the embodiment of the figures, construction waste classified as mixed waste is conveyed from the first input location 5 into the first container 2. Hazardous waste, e.g. construction waste containing asbestos, is conveyed from the second input location 6 into the second container 3. The construction waste is conveyed simultaneously into at least two different containers.

In the embodiment of Fig. 1 a flow connection is formed by connecting the branch pipes 15 of the suction pipe 13 into the selected containers, i.e. in the embodiment into the first container 2 and into the second container 3, e.g. manually. In the embodiment of Fig. 2 the switching means 16 of the branch pipes 15 connected into the first container 2 and into the second container 3 are opened, i.e. they are displaced into a position in which the suction device 7 is in flow connection into the first container 2 and into the second container 3. The switching means 16 of the branch pipe 15 connected into the third container 4 is closed, i.e. it is in a position in which the flow through the branch pipe 15 is prevented. The switching means of the branch pipes 15 of the suction pipe are operated from the input locations 5, 6, e.g. from a control unit on the crusher.

A flow connection is formed between the input locations 5, 6 and the selected containers by means of the pipe arrangement 8. In the embodiment of Fig. 1 a flow connection is formed by connecting the outlet pipe 9 into the selected container e.g. manually. The outlet pipe of the first input location 5 is connected into the first container 2 and the outlet pipe of the second input location 6 is connected into the second container 3.

In the embodiment of Fig. 2 the shut-off means 10 of the outlet pipe 9 of the first input location 5 are displaced into the position in which the first input location 5 is in flow connection with the first container 2. The flow between the first input location 5 and the other containers 3, 4 is prevented. Correspondingly, the shut-off means 10 of the outlet pipe 9 of the second input location 6 are displaced into the position in which the second input location 6 is in flow connection with the second container 3. The flow between the second input location 6 and the other containers 2, 4 is prevented.

In Fig. 2, a flow connection is formed between the input locations 5, 6 and the selected containers with the shut-off means 10 of the branch pipes 12. The shut-off means 10 of the branch pipe of the outlet pipe of the first input location 5, which branch pipe is connected to the first container 2, is opened, i.e. displaced into the position in which the first input location 5 is in flow connection with the first container 2. The flow connection between the second input location 6 and the second container 3 is formed in a corresponding manner, i.e. by opening the shut-off means 10 of the branch pipe 12 that is connected to the second container 3. The shut-off means 10 of the other branch pipes are closed. In the drawings, the shut-off means 10 that are open are uncolored, and those that are closed are colored black. The shut-off means 10 of an outlet pipe 9 are operated from the input location 5, 6 of the outlet pipe in question, e.g. from the control units of crushers.

When the flow connections from the suction device 7 and from the input locations 5, 6 into the selected containers 2, 3 have been formed, the suction of the suction device 7 is transmitted into the selected containers 2, 3 and from the containers 2, 3 onwards to the input locations 5, 6. The construction waste is conveyed from the input locations into the selected containers 2, 3 along the pipe arrangement 8 by means of the suction of the suction device 7. The construction waste is conveyed from the first input location 5, such as from a crusher, into the first container 2 and from the second input location 6, such as from a crusher, into the second container 3. The construction material is separated from the suction air with the material separators of the containers. The air coming out of the suction device 7 is filtered before being conducted into the environment. The containers, or some of the containers, e.g. the second container 3 intended for asbestos waste, can be provided with a prefilter with which the air leaving the container 3 is prefiltered.

If it is desired to change the container 2, 3, 4 into which material is being conveyed from the input locations 5, 6, the switching means 16 of the suction pipe 13 and the shut-off means 10 of the outlet pipes 9 are displaced into the position in which a flow connection forms between the suction device 7, the selected containers 2, 3, 4 and the input locations. When conveying of the material is ended, the suction device 7 and the shut-off means 16, 10 of the suction pipe 13 and of the outlet pipes 9 are closed.

In Fig. 1 the changing of the container is performed by detaching the branch pipe 15 of the suction pipe 13 and the outlet pipe 9 from the container and connecting them to another container.

If necessary, one or more containers 2, 3, 4, e.g. the container 3 intended for asbestos waste, and an input location can be subjected to negative pressure, i.e. ventilated for the desired time, by sucking air with the suction device 7 from the conveying location through the outlet pipe 9, the container and the suction pipe. The outlet pipes 9 and the conveying locations 5, 6 can be subjected to negative pressure together or separately. Negative pressure can be applied automatically under the control, of the control system of the material conveying system 1 when the conveying of material from an input location is terminated, e.g. when a crusher is stopped.

If the input location is a crusher, the control system can stop the crusher if the negative pressure in the system, e.g. in the input pipe 9 of the crusher, drops below a predefined value. The magnitude of the negative pressure in the system can be determined e.g. by measuring or by inspecting the rotational speed of the suction device. The crusher comprises an emergency-stop button. If the emergency-stop button is activated, the control system disconnects the suction to the crusher in question.

In the manner described above, construction waste or other material can be conveyed from the input locations 5, 6 also into the other containers of the system 1. If the system 1 comprises a third input location, it is connected to the containers in a manner corresponding to the first input location 5 and second input location 6. In this case the construction waste can be conveyed simultaneously also from the third input location into the selected container 2, 3, 4, e.g. into the third container 4 or into the same container as from some other input location.

The switching means 16 and branch pipes 15 of the suction pipe can be arranged in the switching unit in a corresponding manner to the shut-off means 10 and branch pipes 12 of the outlet pipes. The embodiments of Figs 1 and 2 can, if necessary, be combined e.g. in such a way that in the same system the branch pipes of a suction pipe are connected into the desired container manually according to Fig. 1 and the outlet pipes 9 with the shut-off means according to Fig. 2, or *vice versa.*

The crusher 19 presented in Figs. 3-6 can be used as the input locations 5, 6 in the material conveying systems according to Figs. 1 and 2. This type of crusher is used e.g. in the dismantling points of buildings, e.g. in the renovation of the piping of whole apartment blocks, in which a crusher 19 is brought into the space being renovated, such as inside a building. The crusher 19 is portable or movable on a trolley to the operating site. The input power of the crusher is typically at most 10-15 kW.

The material for crushing is typically dismantling waste produced in renovation, such as concrete, tiling, plaster mortar and floor casting mortar or other construction material for crushing. The material for crushing can also comprise asbestos and/or elastic material, such as waterproofing. The material for crushing is detached from the dismantling point by chipping. The crushed material is arranged to be removed from the crusher 19 pneumatically with a suction device 7 suitable for the purpose, e.g. with a high-power vacuum. The outlet pipes 9 of the material conveying system 1 are connected into the output apertures 28 of the crushers 19.

The crusher 19 comprises a crushing space 20, e.g. a crushing chamber, into which the material to be crushed is adapted to be conducted. In addition, the crusher 19 comprises a rotatable crusher rotor 21, which comprises crusher blades 22. The crusher blades 22 are tooth-like. The crusher rotor 21 is cylindrical, in which case it is rotated around its axis. The crusher blades 22 are arranged on the outer surface of the crusher rotor 21. The crusher 19 comprises a frame, into which the crusher rotor 21 is fixed in a manner allowing rotation. The crusher 19 comprises a drive device 24 for rotating the crusher rotor 21. The drive device is an electric motor. Gearing can be connected between the electric motor 24 and the crusher rotor 21. The crusher rotor 21 can be rotated in both directions.

In addition, the crusher 19 comprises at least one comb-shaped counterblade unit 23. The counterblade unit 23 comprises counterblades 25 arranged at a distance from each other, between which counterblades the crusher blades 22 are arranged to travel when the crusher rotor 21 is rotated. The counterblades 25 are arranged at a distance from each other in the direction of the axis of rotation 26 of the crusher rotor. The counterblade unit 23 is fixed to the frame of the crusher. The material to be crushed is crushed between the crusher blades 22 and the counterblades 25. The crusher 19 comprises an output chamber 27 for the crushed material. The crushed material is arranged to be removed from the output chamber 27 pneumatically by means of suction and/or by gravity. In the wall of the output chamber is an input aperture. From the output chamber 27 the crushed material is conducted via the input aperture into the suction chamber 34. The suction chamber 34 comprises an output aperture 28, to which the outlet pipe 9 that is in flow connection to the suction device 7 is connected. The diameter of the output aperture 28 is smaller than the diameter of the outlet pipe 9, in which case clogging of the outlet pipe can be prevented. The crushing space 20 and the output chamber 27 are arranged on opposite sides of the counterblade unit 23. The crushed material is conveyed from the crushing space 20 into the output chamber 27 from between the counterblades 25 of the counterblade unit. The size of the crushed material depends on the size of the apertures 29 between the counterblades 25.

The crusher blades 22 are arranged into at least one row of blades 30, 31 in such a way that the crusher blades of the blade row 30, 31 are at a distance from each other in the direction of the axis of rotation 26 of the crusher rotor 21. The crusher blades of a blade row 30, 31 are fitted into different places in the direction of rotation of the crusher rotor 21 in such a way that the crusher blades 22 of the blade row 30, 31 go between the counterblades 25 at different moments when the crusher rotor 21 is rotated. Only some of the crusher blades of a blade row 30, 31 are adapted to simultaneously go between the counterblades 25 when the crusher rotor 21 is rotated. Typically, the crusher blades 22 of a row of blades are adapted to go between the counterblades 25 one by one. The crusher blades 22 are arranged into a row of blades slanting with respect to the axis of rotation 26 of the crusher rotor. In this case a crusher blade 22 at the first end of a blade row 30, 31 is arranged to go between the counterblades 25 first, and a crusher blade 22 at the second end of a blade row 30, 31 last, when the crusher rotor 21 is rotated. The crusher blades between the crusher blades 22 at the ends of a blade row 30, 31 go between the counterblades 25 in a corresponding sequence in such a way that the crusher blade 22 closest to the first end of the blade row 30 goes between the counterblades 25 first and the crusher blade 22 closest to the second end of the blade row 30 goes through last. The blades of a row of blades 30, 31 are arranged to go between the counterblades 25 of the counterblade unit 23 one by one. There are typically 4-6 crusher blades 22 in a row of blades 30, 31.

In the embodiment according to Figs. 3-6, the crusher blades 22 are arranged into two consecutive rows of blades 30, 31 in the direction of rotation of the crusher rotor. The blade rows 30, 31 are arranged slanting with respect to the axis of rotation 26 of the crusher rotor. There are typically 4-6 crusher blades 22 in one row of blade. The crusher blades 22 of the first blade row 30 are arranged in the manner described above. The crusher blades 22 of the second blade row 31 are at a distance from each other in the direction of the axis of rotation 26 of the crusher rotor. The crusher blades of the second blade row 31 are fitted into different places in the direction of rotation of the crusher rotor 22 in such a way that the crusher blades 22 go between the counterblades 25 at different moments when the crusher rotor 21 is rotated. Only some of the crusher blades 22 of the second blade row 31 are adapted to simultaneously go between the counterblades 25 when the crusher rotor 21 is rotated. The crusher blades 22 are arranged into a row of blades slanting with respect to the axis of rotation 26 of the crusher rotor. The crusher blade 22 at the second end of the second blade row 31 is arranged to go between the counterblades 25 first, and the crusher blade 22 at the first end, last when the crusher rotor 21 is rotated. The crusher blades between the crusher blades 22 at the ends of the second blade row 31 go between the counterblades 25 in a corresponding sequence in such a way that the crusher blade closest to the second end of the second blade row 31 goes between the counterblades 31 first, and the crusher blade 22 closest to the first end of the second blade row 31 goes through last. The first blade row 30 stops and the second blade row 31 starts crushing at the same end of the crusher rotor 21. The blades 31 of the second blade row are arranged to go between the counterblades 25 of the counterblade unit one by one.

In addition, the crusher blades 22 are arranged in such a way that the crusher blades 22 of the first blade row 30 are adapted to travel through only some of the apertures 29 between the counterblades 25 of the counterblade unit. The crusher blades 22 of the second blade row 31 are adapted to travel through those apertures 29 between the counterblades 25 of the counterblade unit through which the crusher blades 22 of the first blade row 30 do not travel. The crusher blades 22 can be arranged e.g. in such a way that the crusher blades 22 of the first blade row 30 go through only every second aperture 29 between the counterblades 25. Also, the crusher blades 22 of the second blade row 31 go through only every second aperture 29 between the counterblades. In this case the crusher blades 31 of the second blade row go through those apertures 29 between the counterblades that the crusher blades 22 of the first blade row 30 do not go through. The placement of the crusher blades 22 into rows of blades 30, 31 is illustrated in Fig. 4, which presents the crusher rotor 21 with the enclosure opened.

The crusher blades 22 of the rows 30, 31 of blades travel between the counterblades 25 of the counterblade unit 23 from the crushing space 20 into the output chamber 27 when the crusher rotor is rotated. The crusher 19 also comprises a second counterblade unit 35, which is structurally the same type as the counterblade unit 23. The second counterblade unit 35 comprises counterblades arranged at a distance from each other in the direction of the axis of rotation 26 of the crusher rotor. The rows 30, 31 of blades of the crusher rotor 21 travel between the counterblades of the second counterblade unit 35 from the output chamber 27 into the crushing space 20 when the crusher rotor 21 is rotated. The counterblade unit 23 and the second counterblade unit 35 are arranged at an angle of 80-120 degrees to the crushing space 20. If excessive crushed material accumulates in the output chamber 27, the crusher rotor 21 and the crusher blades 22 convey material through the second counterblade unit 35 back into the crushing space 20. In this way, the overfilling and clogging of the output chamber 27 can be prevented.

When the crusher rotor 21 rotates, the crushing blade 22 nearest the input aperture of the output chamber, i.e. the aperture via which material is removed from the output chamber, extends to the level of the input aperture, typically to level with the center point of the input aperture. The crusher blade 22 nearest the input aperture extends to a distance of at most 50 mm from the input aperture, typically to a distance of 3-30 mm from the input aperture in its axial direction. Thus, the crusher blade 22 nearest the input aperture removes material that has collected in the input aperture, or in the proximity of it, when the crusher rotor 21 rotates and therefore prevents the input aperture from clogging. The output chamber 27 can be provided with a material guide, which guides the crushed material towards the input aperture. The material guide can be an inclined plane that slopes towards the input aperture. Moreover, a sensor can be installed in the output chamber 27 for detecting the amount of material in the output chamber 27. If the amount of material in the output chamber 27 exceeds a predefined level, the sensor stops the rotational movement of the crusher rotor 21 either directly, e.g. by disconnecting the electricity supply to the motor 24, or indirectly, by transmitting information about the filling of the output chamber 27 to the control system of the crusher, and the control system stops the crusher 19.

The crusher blades 22 and counterblades 25 are dimensioned in such a way that the clearance between the crusher blades 22 and the counterblades 25 is relatively small, typically at most 5 mm, when a crusher blade 22 is between the counterblades 25. In this case the elastic material attached to the material being crushed, e.g. to concrete, is effectively sheared in the gap between the crusher blade 22 and the counterblades 25.

The crusher 19 comprises an input 32 for feeding the material to be crushed into the crushing space 4. The input 32 can be an input pipe, which is fastened in a turnable manner e.g. to the frame of the crusher. The input pipe is turnable into the desired position, e.g. according to the operating position of the crusher 1. The input pipe is provided with an input hatch, with which the mouth of the input pipe can be closed. The length of the input pipe when the input hatch is open is such that an arm cannot extend via the pipe into the crushing space 20 to the operating area of the crusher rotor 21. Typically, the length of an input pipe is at least 1 m. The input pipe widens from the mouth towards the crushing space 20.

The crusher 19 also comprises an air extractor connection for an air extractor, to which the hose of the air extractor to be used at the worksite can be connected. The air extractor connection is arranged in a place that is in flow connection with the output aperture 28, e.g. in the wall of the output chamber 27. The air extractor can be used for cleaning the spaces of the worksite and for removing the dust of dust-producing tools, such as a grinding machine. The suction acting in the outlet pipe 9 connected to the output aperture 28 can be switched on and off with a remote controller from the workspace. In this case, when asbestos is present, the suction apparatus can be operated from the workspace as a remote air extractor controllable by means of the crusher.

The crusher 19 comprises an enclosure 33, inside which the crushing space 20, output chamber 27, crusher rotor 21 and counterblade unit 23 are disposed. Also, the electric motor 24 driving the crusher rotor and any gearing are disposed in the enclosure 33. The enclosure 33 is airtight. Air is able to flow out of the enclosure 33 and into the enclosure 33 only from the output aperture 28 and from the input 32. Thus, the crusher 19 can be disposed, e.g. when crushing material containing asbestos, outside the asbestos workspace in such a way that only the input 32 is in the asbestos workspace. By closing the input 32 and the output aperture 28 in an airtight manner, the enclosure 33 can be made fully airtight, in which case the crusher 19 can be moved away from the operating site after cleaning the outer surfaces.

For cooling the electric motor 24, the space between the enclosure 33 and the electric motor 24 is arranged into flow connection with the output aperture 28. In addition, the space between the enclosure 33 and the electric motor 24 is in flow connection to e.g. the input 32 and to another point in the crusher from where cooling air can be conducted into the space surrounding the electric motor 24. In this way, the suction acting in the output aperture 28 sucks the cooling air into the space between the enclosure 33 and the electric motor 24 and onwards into the output aperture 28.

The crusher 19 comprises a support means (not presented), with which the crusher 19 can be supported in the desired position. The support means comprises a support to be fitted against the floor or against another mounting base, the support being fixed in a turnable manner to the enclosure 33. The crusher 19 can be operated in different positions: in a vertical position, in an inclined position, and in a horizontal position. The vertical position can be used in cramped spaces, in which case the crusher 19 requires little floor space. Normally the crusher 19 is used in an inclined position, in which case the material to be crushed ends up in the crushing space 20 in the crushing area of the crusher rotor 21 as efficiently as possible. The crusher 19 is used in a horizontal position in spaces in which it is only possible to get past the crusher 19 over the top of it. Material travels efficiently to the crushing area of the crushing space 20 also in a horizontal position.

The capacity of the crusher 19 can be optimized to be suitable for building renovation, more particularly for the renovation of the piping of a whole apartment block. In such a case, the material to be crushed is detached by chipping in batches a few shovelfuls at a time and the material is transferred into the crusher 19. After this, the chipping is continued. The crusher 19 crushes the material slightly before a new batch of material is ready to be fed into the crusher 19. The crushing speed and crushing power of a crusher 19 can be adapted to the amount of material for crushing produced in the chipping work of one worker. A crusher can comprise a frequency converter with which the power of the crusher 19 and the rotation speed of the crusher rotor 20 can be adjusted.

The crusher 19 functions as follows. An outlet pipe 9, to which suction is connected, is connected to the output aperture 28. The crusher rotor 21 is rotated in the crushing space 20. The material to be crushed is fed via the input 32 into the crushing space 20. The crusher blades 22 pushing into the apertures 29 between the counterblades 25 of the counterblade unit 23 crush the material. Material that fits through the apertures 29 of the counterblade unit travel from the crushing space 20 into the output chamber 27. Material larger than the diameter of the apertures 29 remains in the crushing space 20. The crushed material is sucked and/or travels from the effect of gravity from the output chamber 27 via the input aperture into the suction chamber 34 and onwards via the output aperture 28 into the outlet pipe. The electric motor 24 is cooled by sucking cooling air into the space between the electric motor 24 and the enclosure 33 and onwards into the output aperture 28. If the sensor in the output chamber 27 detects that the crushed material in the output chamber 27 has exceeded a predefined level, the crusher 19 is stopped. The direction of rotation of the crusher rotor 21 can, if necessary, be changed, e.g. if material to be crushed is in front of the counterblade unit 23 and the material prevents rotation of the crusher rotor 21.

After use, a crusher 19 can be ventilated by sucking air through the crusher 19 from the input 32 into the output aperture 28. A crusher 19 can be ventilated e.g. after crushing material containing asbestos. After use, the input 32 and the output aperture 28 can be closed, in which case the material in the inner part of the crusher 19 cannot escape into the environment e.g. during transportation.

## Claims

1. System (1) for conveying construction waste, system (1) comprises
- at least two containers (2, 3, 4), into which construction waste is arranged to be conveyed from at least two different input locations (5, 6),
- a suction device (7), which is connectable into a flow connection with the selected containers (2, 3, 4) by means of a suction pipe (13),
- a pipe arrangement (8) connected to the containers (2, 3, 4) for forming a flow connection between the selected containers (2, 3, 4) and the input locations (5, 6), whereby the construction waste is arranged to be conveyed from the input locations (5, 6) into the selected containers (2, 3, 4) by means of the suction of the suction device (7), and which pipe arrangement (8) comprises an outlet pipe (9) for each input location (5, 6), **characterized in that** the outlet pipe (9) comprises a main pipe (11) and a branch pipe (12), one for each container (2, 3, 4), branching from the main pipe (11), and **in that** each branch pipe (12) is provided with a shut-off means (10), with which the air flow through the branch pipe (12) can be prevented and allowed.

2. System (1) according to claim 1, **characterized in that** the suction device (7) is connected to the containers (2, 3, 4) with a suction pipe (13), which comprises a main pipe (14), which is connected to the suction device (7), and branch pipes (15) branching from the main pipe (14), which are connected to the containers (2, 3, 4), and **in that** each branch pipe (15) is provided with a switching means (16), with which the air flow through the branch pipe (15) can be prevented and allowed.

3. System (1) according to claim 1 or 2, **characterized in that** the shut-off means (10) and branch pipes (12) of at least one or more outlet pipes (9) are wholly or at least partly arranged in the switching unit (17), into which the main pipe (11) of the outlet pipe/main pipes (11) of the outlet pipes are detachably connected.

4. System (1) according to any of the preceding claims, **characterized in that** the containers (2, 3, 4) are provided with material separators for separating construction waste from the air flow.

5. System (1) according to any of the preceding claims, **characterized in that** the input locations (5, 6) are crushers, from which the crushed construction waste is arranged to be conveyed by means of the suction of the suction device (7) into the selected containers (2, 3, 4).

6. System (1) according to any of the preceding claims, **characterized in that** the switching means (16) of the branch pipes (15) of the suction pipe and/or the shut-off means (10) of the branch pipes (12) of the outlet pipes are controllable from an input location (4, 5), such as from a crusher.

7. Method for conveying construction waste, in which method construction waste is conveyed with a system (1) that comprises at least two containers (2, 3, 4), into which construction waste is conveyed from at least two different input locations (5, 6), a suction device (7) connected to the containers (2, 3, 4), and a pipe arrangement (8) connected to the containers for conveying construction waste from the input locations (5, 6) into the containers (2, 3, 4), in which method:
- a flow connection is formed between the input locations (5, 6) and the selected containers (2, 3, 4) by means of the pipe arrangement (8),
- a flow connection is formed from the suction device (7) into the selected containers (2, 3, 4),
- the suction is conducted from the suction device (7) into the selected containers (2, 3, 4), and
- the construction waste is conveyed from the input locations (5, 6) into the selected containers (2, 3, 4) along the pipe arrangement (8) by means of the suction of the suction device (7), which pipe arrangement (8) comprises an outlet pipe (9) for each input location (5, 6) **characterized in that** the outlet pipe (9) comprises a main pipe (11) and a branch pipe (12), one for each container (2, 3, 4), branching from the main pipe (11), and **in that** each branch pipe (12) is provided with shut-off means (10), with which the air flow through the branch pipe (12) can be prevented and allowed, and in which method the shut-off means (10) of the branch pipes are operated in such a way that a flow connection forms between the input locations (5, 6) and the selected containers (2, 3, 4).

8. Method according to claim 7, **characterized in that** the construction waste is conveyed from the input locations (5, 6) into different containers (2, 3, 4).

9. Method according to any of the preceding claims 7 or 8, **characterized in that** the suction device (7) is connected to the containers (2, 3, 4) with a suction pipe (13), which comprises a main pipe (14), which is connected to the suction device (7), and branch pipes (15) branching from the main pipe (14), which are connected to the containers (2, 3, 4), and **in that** each branch pipe (15) is provided with switching means (16) for connecting the suction device (7) into flow connection with the containers (2, 3, 4), and in which method the switching means (16) of the branch pipes (15) are operated in such a way that a flow connection forms between the suction device (7) and the selected containers (2, 3, 4).

10. Method according to any of the preceding claims 7-9, **characterized in that** the input location (5, 6) is a crusher, with which the construction waste is crushed, and **in that** an outlet pipe (9) is connected to the crusher, and the construction waste is conveyed from the crusher into the selected container (2, 3, 4) by means of the suction of a suction device (7).

11. Method according to any of the preceding claims 7-10, **characterized in that** the switching means (16) of a suction pipe and/or the shut-off means (10) of the outlet pipes are operated from an input location (5, 6). e.g. from a crusher.

## Patentansprüche

1. System (1) zum Fördern von Bauabfällen, wobei das System (1) umfasst:
- mindestens zwei Behälter (2, 3, 4), in die Bauabfall von mindestens zwei unterschiedlichen Eingabestellen (5, 6) förderbar ist,
- eine Saugvorrichtung (7), die mittels einer Saugleitung (13) mit den ausgewählten Behältern (2, 3, 4) in eine Strömungsverbindung bringbar ist,
- eine Leitungsanordnung (8), die mit den Behältern (2, 3, 4) dazu verbunden ist, eine Strömungsverbindung zwischen den ausgewählten Behältern (2, 3, 4) und den Eingabestellen (5, 6) zu bilden, wobei der Bauabfall mittels des Sogs der Saugvorrichtung (7) von den Eingabestellen (5, 6) in die ausgewählten Behälter (2, 3, 4) förderbar ist, und wobei die Leitungsanordnung (8) eine Auslassleitung (9) für jede Eingabestelle (5, 6) umfasst, **dadurch gekennzeichnet, dass** die Auslassleitung (9) eine Hauptleitung (11) und eine Zweigleitung (12) umfasst, eine für jeden Behälter (2, 3, 4), die von der Hauptleitung (11) abzweigt, und dass jede Zweigleitung (12) mit einem Absperrmittel (10) versehen ist, mit dem der Luftstrom durch die Zweigleitung (12) unterbunden und zugelassen werden kann.

2. System (1) nach Anspruch 1, **dadurch gekennzeichnet, dass** die Saugvorrichtung (7) mit den Behältern (2, 3, 4) mit einer Saugleitung (13) verbunden ist, die eine Hauptleitung (14) umfasst, die mit der Saugvorrichtung (7) verbunden ist, und von der Hauptleitung (14) abzweigende Zweigleitungen (15), die mit den Behältern (2, 3, 4) verbunden sind, und dass jede Zweigleitung (15) mit einem Schaltmittel (16) versehen ist, mit dem der Luftstrom durch die Zweigleitung (15) unterbunden und zugelassen werden kann.

3. System (1) nach Anspruch 1 oder 2, **dadurch gekennzeichnet, dass** die Absperrmittel (10) und die Zweigleitungen (12) von mindestens einer oder mehreren Auslassleitungen (9) ganz oder zumindest teilweise in der Schalteinheit (17) angeordnet sind, mit der die Hauptleitung (11) der Auslassleitung/Hauptleitungen (11) der Auslassleitungen lösbar verbunden sind.

4. System (1) nach einem der vorhergehenden Ansprüche, **dadurch gekennzeichnet, dass** die Behälter (2, 3, 4) mit Materialabscheidern zum Abscheiden von Bauabfällen aus dem Luftstrom versehen sind.

5. System (1) nach einem der vorhergehenden Ansprüche, **dadurch gekennzeichnet, dass** die Eingabestellen (5, 6) Brecher sind, aus denen der gebrochene Bauabfall mittels des Sogs der Saugvorrichtung (7) in die ausgewählten Behälter (2, 3, 4) förderbar ist.

6. System (1) nach einem der vorhergehenden Ansprüche, **dadurch gekennzeichnet, dass** die Schaltmittel (16) der Zweigleitungen (15) der Saugleitung und/oder die Absperrmittel (10) der Zweigleitungen (12) der Auslassleitungen von einer Eingabestelle (4, 5), wie etwa von einem Brecher, steuerbar sind.

7. Verfahren zum Fördern von Bauabfällen, in dem Bauabfall mit einem System (1) befördert wird, das mindestens zwei Behälter (2, 3, 4) umfasst, in die Bauabfall von mindestens zwei unterschiedlichen Eingabestellen (5, 6) befördert wird, eine mit den Behältern (2, 3, 4) verbundene Saugvorrichtung (7) und eine mit den Behältern verbundene Leitungsanordnung (8) zum Fördern von Bauabfällen von den Eingabestellen (5, 6) in die Behälter (2, 3, 4), bei welchem Verfahren:
- eine Strömungsverbindung zwischen den Eingabestellen (5, 6) und den ausgewählten Behältern (2, 3, 4) mittels der Leitungsanordnung (8) gebildet wird,
- eine Strömungsverbindung von der Saugvorrichtung (7) in die ausgewählten Behälter (2, 3, 4) gebildet wird,
- der Sog von der Saugvorrichtung (7) in die ausgewählten Behälter (2, 3, 4) geleitet wird, und
- der Bauabfall von den Eingabestellen (5, 6) in die ausgewählten Behälter (2, 3, 4) entlang der Leitungsanordnung (8) mittels des Sogs der Saugvorrichtung (7) befördert wird, wobei die Leitungsanordnung (8) eine Auslassleitung (9) für jede Eingabestelle (5, 6) umfasst, **dadurch gekennzeichnet, dass** die Auslassleitung (9) eine Hauptleitung (11) und eine Zweigleitung (12) umfasst, eine für jeden Behälter (2, 3, 4), die von der Hauptleitung (11) abzweigen, und dass jede Zweigleitung (12) mit Absperrmitteln (10) versehen ist, mit denen der Luftstrom durch die Zweigleitung (12) unterbunden und zugelassen werden kann,
und in dem die Absperrmittel (10) der Zweigleitungen derart betrieben werden, dass sich eine Strömungsverbindung zwischen den Eingabestellen (5, 6) und den ausgewählten Behältern (2, 3, 4) bildet.

8. Verfahren nach Anspruch 7, **dadurch gekennzeichnet, dass** der Bauabfall von den Eingabestellen (5, 6) in unterschiedliche Behälter (2, 3, 4) befördert wird.

9. Verfahren nach Anspruch 7 oder 8, **dadurch gekennzeichnet, dass** die Saugvorrichtung (7) mit den Behältern (2, 3, 4) mit einer Saugleitung (13) verbunden ist, die eine mit der Saugvorrichtung (7) verbundene Hauptleitung (14) und von der Hauptleitung (14) abzweigende Zweigleitungen (15) umfasst, die mit den Behältern (2, 3, 4) verbunden sind, und dass jede Zweigleitung (15) mit Schaltmitteln (16) dazu versehen ist, die Saugvorrichtung (7) in Strömungsverbindung mit den Behältern (2, 3, 4) zu bringen, und wobei die Schaltmittel (16) der Zweigleitungen (15) derart betrieben werden, dass sich eine Strömungsverbindung zwischen der Saugvorrichtung (7) und den ausgewählten Behältern (2, 3, 4) bildet.

10. Verfahren nach einem der vorhergehenden Ansprüche 7-9, **dadurch gekennzeichnet, dass** die Eingabestelle (5, 6) ein Brecher ist, mit dem der Bauabfall gebrochen wird, und dass eine Auslassleitung (9) mit dem Brecher verbunden ist und der Bauabfall mittels des Sogs einer Saugvorrichtung (7) vom Brecher in den ausgewählten Behälter (2, 3, 4) befördert wird.

11. Verfahren nach einem der vorhergehenden Ansprüche 7-10, **dadurch gekennzeichnet, dass** die Schaltmittel (16) einer Saugleitung und/oder die Absperrmittel (10) der Auslassleitungen von einer Eingabestelle (5, 6), z.B. von einem Brecher aus, betrieben werden.

## Revendications

1. Système (1) destiné à transporter des déchets de construction, le système (1) comprenant
- au moins deux contenants (2, 3, 4), dans lesquels des déchets de construction sont disposés pour être transportés à partir d'au moins deux emplacements d'entrée différents (5, 6),
- un dispositif d'aspiration (7), qui peut être raccordé en communication d'écoulement avec les contenants sélectionnés (2, 3, 4) au moyen d'une conduite d'aspiration (13),
- un agencement de conduites (8) raccordées aux contenants (2, 3, 4) pour former une communication d'écoulement entre les contenants sélectionnés (2, 3, 4) et les emplacements d'entrée (5, 6), ce par quoi les déchets de construction sont disposés pour être transportés des emplacements d'entrée (5, 6) dans les contenants sélectionnés (2, 3, 4) au moyen de l'aspiration du dispositif d'aspiration (7), et ledit agencement de conduites (8) comprenant une conduite de sortie (9) pour chaque emplacement d'entrée (5, 6), **caractérisé en ce que** la conduite de sortie (9) comprend une conduite principale (11) et une conduite de dérivation (12), une pour chaque contenant (2, 3, 4), dérivant de la conduite principale (11), et **en ce que** chaque conduite de dérivation (12) est pourvue d'un moyen d'arrêt (10), qui permet d'empêcher et d'autoriser l'écoulement d'air à travers la conduite de dérivation (12).

2. Système (1) selon la revendication 1, **caractérisé en ce que** le dispositif d'aspiration (7) est raccordé aux contenants (2, 3, 4) par une conduite d'aspiration (13), qui comprend une conduite principale (14), qui est raccordée au dispositif d'aspiration (7), et des conduites de dérivation (15) dérivant de la conduite principale (14), qui sont raccordées aux contenants (2, 3, 4), et **en ce que** chaque conduite de dérivation (15) est pourvue d'un moyen de commutation (16), qui permet d'empêcher et d'autoriser l'écoulement d'air à travers la conduite de dérivation (15) .

3. Système (1) selon la revendication 1 ou la revendication 2, **caractérisé en ce que** les moyens d'arrêt (10) et les conduites de dérivation (12) d'au moins une ou plusieurs conduites de sortie (9) sont entièrement ou au moins partiellement disposés dans l'unité de commutation (17), dans laquelle la conduite principale (11) de la conduite de sortie/les conduites principales (11) des conduites de sortie peuvent être raccordées de manière amovible.

4. Système (1) selon l'une quelconque des revendications précédentes, **caractérisé en ce que** les contenants (2, 3, 4) sont pourvus de séparateurs de matériaux destinés à séparer des déchets de construction de l'écoulement d'air.

5. Système (1) selon l'une quelconque des revendications précédentes, **caractérisé en ce que** les emplacements d'entrée (5, 6) sont des broyeurs, à partir desquels des déchets de construction broyés sont disposés pour être transportés au moyen de l'aspiration du dispositif d'aspiration (7) dans les contenants sélectionnés (2, 3, 4).

6. Système (1) selon l'une quelconque des revendications précédentes, **caractérisé en ce que** les moyens de commutation (16) des conduites de dérivation (15) de la conduite d'aspiration et/ou les moyens d'arrêt (10) des conduites de dérivation (12) des conduites de sortie peuvent être commandés à partir d'un emplacement d'entrée (4, 5), comme à partir d'un broyeur.

7. Procédé de transport de déchets de construction, dans lequel procédé des déchets de construction sont transportés par un système (1) qui comprend au moins deux contenants (2, 3, 4), dans lesquels des déchets de construction sont transportés à partir d'au moins deux emplacements d'entrée différents (5, 6), un dispositif d'aspiration (7) raccordé aux contenants (2, 3, 4), et un agencement de conduites (8) raccordées aux contenants pour transporter des déchets de construction des emplacements d'entrée (5, 6) dans les contenants (2, 3, 4), dans lequel procédé :
- une communication d'écoulement est formée entre les emplacements d'entrée (5, 6) et les contenants sélectionnés (2, 3, 4) au moyen de l'agencement de conduites (8),
- une communication d'écoulement est formée à partir du dispositif d'aspiration (7) dans les contenants sélectionnés (2, 3, 4),
- l'aspiration est assurée du dispositif d'aspiration (7) dans les contenants sélectionnés (2, 3, 4), et
- les déchets de construction sont transportés des emplacements d'entrée (5, 6) dans les contenants sélectionnés (2, 3, 4) le long de l'agencement de conduites (8) au moyen de l'aspiration du dispositif d'aspiration (7), lequel agencement de conduites (8) comprend une conduite de sortie (9) pour chaque emplacement d'entrée (5, 6), **caractérisé en ce que** la conduite de sortie (9) comprend une conduite principale (11) et une conduite de dérivation (12), une pour chaque contenant (2, 3, 4), dérivant de la conduite principale (11), et **en ce que** chaque conduite de dérivation (12) est pourvue d'un moyen d'arrêt (10), qui permet d'empêcher et d'autoriser l'écoulement d'air à travers la conduite de dérivation (12), et dans lequel procédé les moyens d'arrêt (10) des conduites de dérivation sont mis en œuvre d'une manière telle qu'une communication d'écoulement soit formée entre les emplacements d'entrée (5, 6) et les contenants sélectionnés (2, 3, 4).

8. Procédé selon la revendication 7, **caractérisé en ce que** les déchets de construction sont transportés des emplacements d'entrée (5, 6) dans des contenants différents (2, 3, 4).

9. Procédé selon l'une ou l'autre des revendications 7 et 8, **caractérisé en ce que** le dispositif d'aspiration (7) est raccordé aux contenants (2, 3, 4) par une conduite d'aspiration (13), qui comprend une conduite principale (14), qui est raccordée au dispositif d'aspiration (7), et des conduites de dérivation (15) dérivant de la conduite principale (14), qui sont raccordées aux contenants (2, 3, 4), et **en ce que** chaque conduite de dérivation (15) est dotée d'un moyen de commutation (16) destiné à raccorder le dispositif d'aspiration (7) en communication d'écoulement avec les contenants (2, 3, 4), et dans lequel procédé les moyens de commutation (16) des conduites de dérivation (15) sont mis en œuvre d'une manière telle qu'une communication d'écoulement soit formée entre le dispositif d'aspiration (7) et les contenants sélectionnés (2, 3, 4).

10. Procédé selon l'une quelconque des revendications précédentes 7 à 9, **caractérisé en ce que** l'emplacement d'entrée (5, 6) est un broyeur, au moyen duquel les déchets de construction sont broyés, et **en ce qu'**une conduite de sortie (9) est raccordée au broyeur, et les déchets de construction sont transportés du broyeur dans le contenant sélectionné (2, 3, 4) au moyen de l'aspiration d'un dispositif d'aspiration (7).

11. Procédé selon l'une quelconque des revendications précédentes 7 à 10, **caractérisé en ce que** le moyen de commutation (16) d'une conduite d'aspiration et/ou les moyens d'arrêt (10) des conduites de sortie sont mis en œuvre à partir d'un emplacement d'entrée (5, 6), par exemple à partir d'un broyeur.
